# DEMANDE DE BREVET EUROPEEN

(11) **EP 2 546 204 A1**
(43) Date de publication de la demande: **16.01.2013**
(21) Numéro de dépôt: 11305932.3
(22) Date de dépôt: 15.07.2011
(51) Int. Cl.: C03B 5/04, C03B 5/235, C03B 5/237

(54) **Procédé et installation de fusion de verre**

(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Jarry, Luc, 92190 MEUDON (FR)
(74) Mandataire: De Vleeschauwer, Natalie Y.L.D.

(57) **Abrégé**

Procédé de fusion de verre dans lequel, pendant une première phase, on utilise un débit DO1 d'un comburant riche en oxygène pour la combustion d'un combustible dans la chambre de combustion 100, l'oxydant riche en oxygène étant préchauffé par échange thermique avec un oxydant moins riche en oxygène, ledit oxydant moins riche étant chauffé par échange thermique avec les fumées générées, et pendant une deuxième phase, on utilise comme comburant un débit réduit DO2 de l'oxydant riche en oxygène ainsi qu'un débit DA2 de l'oxydant moins riche chauffé ; et installation pour la mise en oeuvre dudit procédé de fusion.

## Description

La présente invention concerne des procédés et fours de fusion de verre avec récupération d'énergie thermique des fumées générées pour le préchauffage d'un comburant et utilisant un comburant riche en oxygène.

Il est connu, notamment dans le domaine des fours de fusion de verre, d'utiliser un comburant riche en oxygène, tel qu'un oxydant ayant une teneur en oxygène d'au moins 80%vol, pour réduire les émissions polluantes (NOx, poussières) et la consommation énergétique des fours.

Selon une technologie particulièrement avantageuse décrite dans US-A-6071116, le bilan économique du four est amélioré en préchauffant au moins un réactif (comburant et/ou combustible) en amont des brûleurs. Ceci est réalisé en plaçant un ou des échangeurs de chaleurs sur le circuit des fumées en aval de la chambre de combustion du four dans le(s)quel(s) un fluide intermédiaire sûr, tel que de l'air, du CO₂, de l'azote et de la vapeur, est chauffé par échange thermique avec les fumées chaudes issues de la chambre de combustion et dans le(s)quel(s) le au moins un réactif est préchauffé par échange thermique avec le fluide intermédiaire chauffé.

Contrairement aux fours utilisant de l'air comme comburant, pour lesquels une alimentation suffisante en comburant ne pose normalement pas de problème étant donné l'abondance d'air ambiant, les fours utilisant un comburant riche en oxygène ont besoin d'une source dédiée et importante de comburant à proximité du four, tel qu'un pipeline, une unité de séparation des gaz de l'air, voire un réservoir de comburant avec une capacité suffisamment large. Ceci ne permet toutefois pas d'exclure une interruption de fourniture de comburant riche en oxygène, par exemple suite à un problème technique ou logistique.

Etant donné les dommages majeurs en cas d'arrêt de four suite à une interruption de fourniture de comburant riche en oxygène, il est connu d'installer un réservoir de dépannage, souvent désigné par le terme anglais « backup », pour le stockage d'une réserve de comburant riche en oxygène à proximité du four. Un tel « backup » permet une opération continue du four de fusion, souvent en mode dégradé, voire un simple maintien à température du four en cas de défaillance de la source habituelle du comburant riche en oxygène. Toutefois et en particulier dans le cas des fours de fusion de tirée importante, tels que les fours « float », le « backup » ne permet qu'une autonomie très limitée dans le temps.

US-A-6071116 décrit une solution alternative avec préchauffage d'au moins un réactif de combustion par échange thermique avec les fumées à travers un fluide intermédiaire dans lequel on utilise de l'air comme fluide intermédiaire. Selon cette solution, on dirige un flux d'air intermédiaire chauffé vers les brûleurs comme comburant en cas d'interruption de fourniture du comburant riche en oxygène, permettant ainsi une autonomie prolongée du four.

La mise en oeuvre de cette proposition n'est toutefois pas dépourvue de problèmes. En effet, la quantité de fumées générées par l'aérocombustion est beaucoup plus importante que la quantité de fumées générées par l'oxycombustion à puissance identique. Un four de fusion conçu pour opération en oxycombustion n'est donc pas normalement apte à gérer le débit plus élevé de fumées générées à puissance analogue lors d'une opération éventuelle en aérocombustion, nécessitant ainsi une opération en régime sensiblement dégénéré du four en cas d'aérocombustion. Un autre problème potentiel est que les brûleurs conçus pour un fonctionnement avec un comburant riche en oxygène ne permettent normalement pas un fonctionnement efficace et fiable avec de l'air comme comburant. Des brûleurs bicomburants conçus pour permettre un fonctionnement à la fois avec un comburant riche en oxygène et avec de l'air existent, mais sont plus couteux et leur complexité les rend potentiellement moins fiables dans un environnement particulièrement hostile telles que les chambres de combustion d'un four de fusion de verre.

La présente invention a pour but de remédier au moins partiellement aux problèmes décrits ci-dessus.

La présente invention propose d'atteindre ce but au moyen du procédé et de l'installation suivant l'invention tels que décrits ci-après.

La présente invention propose en particulier un procédé de fusion de verre dans un four de fusion, dans lequel on utilise un premier oxydant et un deuxième oxydant. Le premier oxydant est choisi parmi l'air et l'air enrichi en oxygène. Le deuxième oxydant a une teneur en oxygène de 80%vol à 100%vol, de préférence de 90%vol à 100%vol, la teneur en oxygène du deuxième oxydant étant supérieure à la teneur en oxygène du premier oxydant.

Selon l'invention, le verre est fondu dans un four de fusion comportant une chambre de fusion et une installation de préchauffage.

La chambre de fusion est équipée de n brûleurs pour la combustion d'un combustible dans la chambre, le nombre de brûleurs étant supérieur ou égal à 1 (n≥1). Ces n brûleurs génèrent ainsi de l'énergie thermique et un flux chaud de fumées qui présente une température à la sortie de la chambre de 1000°C à 1600°C.

Parmi les n brûleurs, on compte m brûleurs dits « premiers brûleurs », le nombre m de premiers brûleurs étant supérieur ou égal à 1 et inférieur ou égal au nombre n de brûleurs de la chambre de fusion (1≤m≤m).

Suivant l'invention, de la matière première solide est fondue dans la chambre de fusion de manière à obtenir du verre fondu. Le flux chaud de fumées issu de la chambre est introduit dans l'installation de préchauffage afin de récupérer une partie de l'énergie thermique présente dans ledit flux chaud de fumées par l'intermédiaire d'un fluide caloporteur.

Ainsi, on chauffe un flux d'un fluide caloporteur par échange thermique avec le flux chaud des fumées dans un premier échangeur thermique de l'installation de préchauffage de manière à générer, d'une part, un flux refroidi des fumées et, d'autre part, un flux chauffé du fluide caloporteur, ledit flux chauffé du fluide caloporteur ayant une température entre 600°C et 800°C à la sortie du premier échangeur thermique.

Dans une première phase du procédé de fusion, on utilise comme fluide caloporteur le premier oxydant, qui consiste en de l'air ou de l'air enrichi en oxygène. On préchauffe un flux du deuxième oxydant, qui est plus riche en oxygène que le premier, dans un deuxième échangeur thermique de l'installation de préchauffage par échange thermique avec le flux chauffé du fluide caloporteur de manière à générer, d'une part, un flux préchauffé du deuxième oxydant ayant une température entre 400°C et 600°C à la sortie du deuxième échangeur thermique et un flux tempéré du fluide caloporteur ayant une température entre 450°C et 500°C à la sortie du deuxième échangeur thermique.

Dans cette première phase du procédé, un débit DO1 du flux préchauffé du deuxième oxydant est fourni aux m premiers brûleurs en tant que comburant, avec DO1 > 0 Nm³/min.

L'utilisation d'un tel comburant préchauffé et riche en oxygène permet de baisser les émissions polluantes et de réaliser un excellent rendement énergétique.

Dans le contexte présent, les volumes de gaz sont exprimés en mètres cubes normaux (Nm³), 1 Nm³ correspondant à la quantité d'un gaz qui occupe 1 m³ à 1 atm.

Le procédé suivant l'invention comporte également une deuxième phase dans laquelle on fournit aux m premiers brûleurs un débit DO2 du deuxième oxydant qui est supérieur à 0 Nm³/min, mais inférieur au débit DO1 du deuxième oxydant qui est fourni aux m premiers brûleurs pendant la première phase du procédé. Pendant cette deuxième phase du procédé, on fournit également un débit DA2 du premier oxydant aux m premiers brûleurs en tant que comburant, avec DA2 > 0 Nm³/min.

Suivant l'invention, le débit DA2 du premier oxydant est fourni comme comburant aux m premiers brûleurs sous forme d'une portion correspondante du flux chauffé de fluide caloporteur.

Le débit DO2 du deuxième oxydant peut être fourni aux m premiers brûleurs :
i) entièrement séparément du débit DA2 du premier oxydant fourni aux m premiers brûleurs,
ii) entièrement en mélange avec le débit DA2 du premier oxydant fourni aux m premiers brûleurs, ou encore
iii) partiellement mélangé avec le débit DA2 du premier oxydant et partiellement de façon séparée du débit DA2 du premier oxydant.

Dans le premier cas (fourniture entièrement séparée du premier et du deuxième oxydant aux premiers brûleurs), on utilisera le premier oxydant comme fluide caloporteur dans la deuxième phase.

Dans les deux autres cas (fourniture entièrement ou partiellement mélangée du premier et du deuxième oxydant aux premiers brûleurs), la nature du fluide caloporteur utilisé dans la deuxième phase dépendra d'où l'on fait le mélange (partielle ou complète) entre le premier et le deuxième oxydant. Quand le débit DO2 du deuxième oxydant est partiellement ou totalement mélangé avec le premier oxydant en amont du premier échangeur thermique de l'installation de préchauffage (c'est-à-dire entre les deux sources d'oxydant et le premier échangeur thermique), le mélange ainsi obtenu en amont du premier échangeur thermique est utilisé comme fluide caloporteur. Par contre, quand le débit DO2 du deuxième oxydant n'est pas du tout mélangé avec le débit DA2 du premier oxydant en amont du premier échangeur thermique mais uniquement en aval du premier échangeur thermique, le premier oxydant est utilisé comme fluide caloporteur dans la deuxième phase du procédé.

En fournissant ainsi, dans la deuxième phase du procédé, un débit réduit du deuxième oxydant comme comburant aux m premiers brûleurs de la chambre de fusion en combinaison avec un débit du premier oxydant préchauffé, l'autonomie du four de fusion en cas de pénurie du deuxième oxydant est fortement augmentée. Ainsi, on utilise avantageusement la deuxième phase du procédé suivant l'invention en cas de pénurie du deuxième oxydant. L'utilisation de la première phase est préférée quand il n'y a pas pénurie du deuxième oxydant, notamment afin de réduire les émissions polluantes qui sont de plus en plus soumises à des règlements stricts.

Etant donné que, pendant la deuxième phase, les m premiers brûleurs sont alimentés avec une combinaison de premier et second oxydants, et donc, globalement, avec une combinaison en comburants plus riche en oxygène que de l'air, le volume de fumées générées dans la chambre pendant la deuxième phase est relativement proche du volume de fumées générées pendant la première phase.

On note aussi qu'il n'est pas nécessaire d'utiliser comme premiers brûleurs des brûleurs bicomburants coûteux pouvant fonctionner à la fois en aérocombustion et en oxycombustion. Il suffit de faire appel à des brûleurs pouvant fonctionner avec des comburants riches en oxygène à teneur en oxygène variable. Un autre avantage important du procédé suivant l'invention est que les propriétés (taille, (profil de) température, luminosité, etc.) des flammes générées par les m premiers brûleurs pendant la deuxième phase sont proches des propriétés des flammes générées pendant la première phase, ce qui d'une part, permet de limiter l'impact du changement de phase sur les propriétés du verre fondu obtenu et d'autre part, réduit fortement le risque d'endommagement de la chambre et de son équipement pendant la deuxième phase.

La « première phase » et la « deuxième phase » sont deux étapes distinctes du procédé suivant l'invention. Il n'est toutefois pas nécessaire que la première phase précède la deuxième phase dans le temps. L'inverse est également possible, ainsi qu'une opération du four comportant plusieurs premières et/ou deuxièmes phases. Ainsi, il est envisageable de démarrer l'installation selon la deuxième phase du procédé avant de passer à la première phase.

Suivant une forme de réalisation, il n'y a pas de préchauffage d'un flux du deuxième oxydant par échange thermique avec le flux chauffé du fluide caloporteur dans le deuxième échangeur thermique pendant la deuxième phase du procédé. Le débit DO2 du deuxième oxydant est alors fourni aux m premiers brûleurs sans préchauffage préalable dans le deuxième échangeur thermique.

Suivant une forme de réalisation préférée, tous les brûleurs de la chambre de fusion sont des premiers bruleurs, c'est-à-dire m = n.

Le premier oxydant peut être de l'air et notamment de l'air ambiant fourni par une soufflante d'air. Ceci est notamment indiqué quand le flux tempéré de fluide caloporteur est finalement évacué par la cheminée.

Le premier oxydant peut également être de l'air enrichi en oxygène, par exemple de l'air ambiant fourni par une soufflante et enrichi en oxygène en aval de cette soufflante. L'oxygène pour l'enrichissement en oxygène du premier oxydant peut notamment être fourni par la deuxième source qui fournit également le deuxième oxydant. Cette forme de réalisation peut être indiquée quand, pendant la ou les premières phases du procédé, le flux tempéré de fluide caloporteur est utilisé comme oxydant en aval de l'installation de préchauffage. Par exemple, le flux tempéré de fluide caloporteur est utilisé comme comburant dans une chaudière également présente sur le site.

Ainsi, quand le premier oxydant présente une teneur en oxygène du premier oxydant entre 21%vol et 40%vol, voire entre 21%vol et 25%vol, le flux tempéré de fluide caloporteur peut, par exemple, avantageusement être utilisé pendant la première phase comme comburant dans un procédé ou dispositif d'aérocombustion ou de combustion avec de l'air faiblement enrichi en oxygène.

Quand la teneur en oxygène du premier oxydant est entre 40%vol et 90%vol, mais toujours inférieure à la teneur en oxygène du deuxième oxydant, le fluide caloporteur peut, par exemple, avantageusement être utilisé pendant la première phase comme comburant dans un procédé ou dispositif d'oxycombustion.

Comme indiqué ci-dessus, le deuxième oxydant a une teneur en oxygène de 80%vol à 100%vol. De préférence, le deuxième oxydant présente une teneur en oxygène de 90%vol à 100%vol. Si la capacité du four et donc son besoin en deuxième oxydant pendant la première phase est suffisamment faible, l'alimentation du four en deuxième oxydant peut être assurée par un ou plusieurs réservoirs de stockage du deuxième oxydant. L'alimentation du four en deuxième oxydant peut être aussi assurée par une unité de séparation des gaz de l'air ou d'un pipeline. Dans ce cas, il est souhaitable d'également prévoir un réservoir de dépannage ou « backup » du deuxième oxydant en cas de défaillance de l'unité de séparation des gaz de l'air ou du pipeline.

Le four de fusion peut être un four à boucle (en anglais : « end-fired furnace »). Dans ce cas, le four comporte typiquement un nombre très limité de brûleurs, par exemple 1 ≤ n ≤ 4.

Toutefois, l'invention est particulièrement intéressante pour les fours de fusion float. Dans le cas d'un four de fusion de type float, la configuration des brûleurs est généralement constituée d'un nombre important de brûleurs placés perpendiculairement à l'axe longitudinal de la chambre de fusion. La puissance de chacun des brûleurs est individuellement ajustée, ou ajustée par groupe de brûleurs, pour établir le profil thermique recherché dans la chambre de fusion.

La puissance totale du ou des brûleurs d'un four de fusion de verre est ajustée en fonction de la tirée (débit de verre fondu) du four.

Le four de fusion peut comporter plusieurs installations de préchauffage. Par exemple, le four peut comporter deux installations de préchauffage : une installation par côté latéral du four. Ceci est notamment intéressant pour les fours float. Dans ce cas, chaque installation de préchauffage fournira du comburant à un nombre (ou groupe) de mᵢ de premiers bruleurs, avec Σ mᵢ ≤ n.

Une installation de préchauffage peut aussi comporter plusieurs deuxièmes échangeurs thermiques. Dans ce cas, chaque deuxième échangeur thermique fournira, pendant la première phase, un flux chaud de deuxième oxydant à un nombre (ou groupe) de mⱼ de premiers bruleurs, avec Σ mⱼ ≤ n.

Ainsi, une installation de préchauffage peut comporter un premier échangeur thermique situé à proximité de la sortie de fumées de la chambre et au moins un deuxième échangeur thermique de chaque côté du four. Par exemple, dans le cas d'un four à boucle chauffé par un premier brûleur à gauche et un autre premier brûleur à droite de la sortie de fumées de la chambre, l'installation de préchauffage peut comporter un premier échangeur thermique derrière la paroi amont à proximité de la sortie de fumées et un deuxième échangeur thermique de chaque côté du premier échangeur thermique derrière la paroi amont, chaque deuxième échangeur étant à proximité d'un des deux premiers brûleurs. Chaque deuxième échangeur thermique étant alors relié au premier échangeur thermique de manière à ce que, pendant la première phase du procédé, une portion du flux chauffé de fluide caloporteur est fournie à chaque deuxième échangeur thermique.

De manière analogue, il est possible, notamment dans le cas d'un four, tel qu'un four float chauffé par des brûleurs montés dans les deux parois latérales, d'utiliser une installation de préchauffage qui comporte un premier échangeur thermique à proximité d'une sortie de fumées et un deuxième échangeur thermique à côté de chaque paroi latérale du four. Chaque deuxième échangeur thermique est alors relié au premier échangeur thermique de manière à ce que, pendant la première phase du procédé, une portion du flux chauffé de fluide caloporteur est fournie à chaque deuxième échangeur thermique de l'installation de préchauffage.

Suivant une forme de réalisation avantageuse, l'installation de préchauffage est également utilisée pour le préchauffage du combustible en amont des brûleurs et donc de la chambre de fusion. Le préchauffage du combustible peut ainsi être réalisé par échange thermique avec le flux chaud de fumées et/ou par échange thermique avec le flux chauffé de fluide caloporteur.

Suivant une forme de réalisation avantageuse du procédé, on vérifie de manière continue ou discontinue la quantité (débit ou quantité globale) du deuxième oxydant pouvant être fournie au four de fusion par la deuxième source. Cette quantité disponible du deuxième oxydant est comparée avec le besoin en deuxième oxydant (à prévoir) du four de fusion. Le résultat de cette comparaison peut alors être utilisé pour déterminer la phase (première ou deuxième phase) dans laquelle il convient d'opérer le four de fusion et/ou, pendant une deuxième phase du procédé, de déterminer le rapport DO2/DA2 qu'il convient d'appliquer. Ainsi, quand le four fonctionne en première phase et que l'on constate une pénurie (actuelle ou à prévoir) du deuxième oxydant, le procédé suivant l'invention passera en deuxième phase. De manière analogue, quand le four fonctionne en deuxième phase et que l'on constate qu'il n'y pas ou plus de pénurie (actuelle ou à prévoir) du deuxième oxydant, il est utile de passer le procédé en première phase.

De préférence, on procède de manière automatisée, d'une part à la vérification continue ou discontinue de la quantité (débit ou quantité globale) du deuxième oxydant pouvant être fourni au four de fusion par la deuxième source, et d'autre part à la comparaison de cette quantité disponible du deuxième oxydant avec le besoin en deuxième oxydant du four de fusion, le résultat de cette comparaison étant utilisé pour le réglage ou le choix de la phase (première ou deuxième phase) à utiliser et/ou, pendant une deuxième phase, pour le réglage du rapport DO2/DA2.

Suivant une forme de réalisation particulière, le deuxième oxydant est fourni pendant la première phase du procédé par une source principale du deuxième oxydant (typiquement un pipeline ou une unité de séparation des gaz de l'air) et, pendant la deuxième phase, le deuxième oxydant est fourni par un réservoir de dépannage ou « backup ».

La présente invention concerne également une installation de fusion de verre apte à être mise en oeuvre dans le procédé suivant l'invention.

L'installation de fusion suivant l'invention comporte une unité de fourniture avec notamment une source de combustible, une première source d'un premier oxydant qui consiste en de l'air ou de l'air enrichi en oxygène et une deuxième source d'un deuxième oxydant ayant une teneur en oxygène de 80%vol à 100%vol, de préférence de 90%vol à 100%vol, et supérieure à la teneur en oxygène du premier oxydant.

L'installation de fusion comporte également un four de fusion comportant une chambre de fusion équipée de n brûleurs pour la combustion d'un combustible avec du comburant de manière à générer, à l'intérieur de la chambre, de l'énergie thermique et un flux chaud de fumées. La chambre comporte au moins un brûleur, c'est-à-dire n ≥ 1. Ladite chambre de fusion est également munie d'une sortie de fumées pour l'évacuation de la chambre du flux chaud de fumées,

Le four de fusion inclut aussi une installation de préchauffage telle que décrite ci-après.

L'installation de fusion suivant l'invention comporte aussi un réseau de canalisations qui relie l'unité de fourniture, l'installation de préchauffage et la chambre de fusion.

Suivant l'invention, m des n brûleurs sont des premiers brûleurs, avec 1 ≤ m ≤ n.

L'installation de préchauffage comporte un premier échangeur thermique et un deuxième échangeur thermique. Le premier échangeur thermique est conçu pour le chauffage d'un flux d'un fluide caloporteur contenant du premier oxydant par échange thermique entre ledit fluide caloporteur et le flux chaud de fumées, le réseau de canalisations reliant (a) la sortie de fumées de la chambre de fusion à une entrée de flux chaud de fumées dudit premier échangeur thermique, et (b) la première source à une entrée de fluide caloporteur à chauffer dudit premier échangeur thermique. Le deuxième échangeur thermique est conçu pour le préchauffage d'un flux du deuxième oxydant par échange thermique avec le flux chauffé de fluide caloporteur, le réseau de canalisations reliant (a) la deuxième source (du deuxième oxydant) avec une entrée du deuxième oxydant du deuxième échangeur, (b) une sortie de flux chauffé de fluide caloporteur du premier échangeur thermique avec une entrée de flux chauffé de fluide caloporteur du deuxième échangeur thermique, et (c) une sortie d'un flux chaud du deuxième oxydant du deuxième échangeur thermique avec une entrée de comburant des m premiers brûleurs.

Suivant l'invention, le réseau de canalisations relie également une sortie de flux chauffé de fluide caloporteur du premier échangeur thermique avec une entrée de comburant des m premiers brûleurs.

Ce qui plus est, le réseau de canalisations est muni d'une unité de réglage pour le réglage du débit du premier oxydant vers les m premiers brûleurs et pour le réglage du débit du deuxième oxydant vers les m premiers brûleurs.

Ces débits sont en premier lieu déterminés par les besoins du four et notamment par la tirée du four et la nature de la matière première à fondre et du verre fondu à obtenir.

Dans le présent contexte, on comprend que deux éléments de l'installation sont « reliés » par le réseau de canalisations quand le réseau permet l'écoulement d'un fluide entre les deux éléments, même si l'unité de réglage permet de bloquer un tel écoulement entre certains éléments ainsi liés, par exemple au moyen d'une vanne.

L'unité de réglage est avantageusement connectée à la deuxième source qui fournit le deuxième oxydant. L'unité de réglage est alors apte à régler les débits de premier et de deuxième oxydants vers les m premiers brûleurs en fonction d'un débit disponible de deuxième oxydant détecté par l'unité de réglage. De cette manière, l'unité de réglage permet d'adapter le fonctionnement du four en cas de perturbation de la fourniture normale du deuxième oxydant par la deuxième source.

L'unité de fourniture de l'installation suivant l'invention comporte avantageusement un réservoir de dépannage contenant du deuxième oxydant, ledit réservoir de dépannage pouvant être utilisé comme source alternative ou « backup » du deuxième oxydant en cas d'interruption de la fourniture du deuxième oxydant par la deuxième source, en particulier dans le cas d'une interruption prolongée, significative ou totale de la fourniture par la deuxième source.

Le réseau de canalisations relie alors également le réservoir de dépannage avec les m premiers brûleurs.

La fourniture partielle ou totale du deuxième oxydant par le réservoir de dépannage est avantageusement réglée par l'unité de réglage.

De manière avantageuse, le réseau de canalisations relie également la sortie de flux chauffé de fluide caloporteur du premier échangeur thermique avec une entrée de comburant des m premiers brûleurs sans passage par le deuxième échangeur thermique.

Il est à noter que les m premiers brûleurs peuvent comporter plusieurs entrées de comburant, notamment pour réaliser une combustion étagée par injections de plusieurs jets de comburant dans le four. Par exemple, les m premiers brûleurs peuvent comporter une entrée pour le deuxième oxydant et une entrée pour le flux de fluide caloporteur.

Suivant une forme de réalisation, le réseau de canalisations relie aussi, en aval du premier échangeur thermique, la deuxième source d'oxydant avec la sortie de flux chauffé de fluide caloporteur. Ceci permet, en particulier pendant la deuxième phase du procédé, de mélanger au moins une partie du deuxième oxydant avec ou au moins une partie du fluide caloporteur, le mélange ainsi obtenu pouvant être fourni aux m premiers brûleur en tant que comburant. Le réseau de canalisations peut alors être muni d'une ou plusieurs vannes pour le réglage dudit mélange, ladite vanne ou lesdites vannes étant avantageusement connectées et contrôlées par l'unité de réglage.

Le réseau de canalisations peut également relier la deuxième source d'oxydant avec l'entrée de fluide caloporteur du premier échangeur thermique. Ceci permet, notamment pendant la deuxième phase du procédé, de mélanger au moins partiellement le deuxième oxydant avec le premier oxydant et d'utiliser le mélange ainsi obtenu comme fluide caloporteur dans le premier échangeur thermique et le flux chauffé de ce fluide caloporteur peut être fourni aux m premiers brûleurs en tant que comburant. Le réseau de canalisations peut alors être muni d'une ou plusieurs vannes pour le réglage dudit mélange, ladite vanne ou lesdites vannes étant avantageusement connectées à et contrôlées par l'unité de réglage.

Le réseau de canalisations relie de préférence également la sortie de flux chauffé de fluide caloporteur du premier échangeur thermique avec une entrée de comburant des m premiers brûleur sans que ledit flux chauffé de fluide caloporteur passe par le deuxième échangeur thermique. Dans ce cas, le réseau de canalisations est avantageusement muni de vannes permettant, d'une part, de bloquer partiellement ou totalement l'écoulement du flux chauffé de fluide caloporteur vers l'entrée de comburant des m premiers brûleurs sans passage par le deuxième échangeur thermique, notamment pendant une première phase du procédé suivant l'invention, et, d'autre part, de bloquer partiellement ou totalement l'écoulement du flux chauffé de fluide caloporteur vers le deuxième échangeur thermique, notamment pendant une deuxième phase du procédé suivant l'invention. Lesdites vannes sont de préférence connectées à et contrôlées par l'unité de réglage.

La chambre de fusion peut également comporter des brûleurs autres que les premiers brûleurs. Dans ce cas, m < n. De préférence, l'ensemble des brûleurs de la chambre de fusion sont des premiers brûleurs reliés à l'installation de préchauffage comme décrits ci-dessus. Dans ce cas m = n.

Les brûleurs, et en particulier les premiers brûleurs, peuvent en particulier être des brûleurs à combustion étagée, tels que les brûleurs commercialisés par la demanderesse sous la dénomination commerciale d'ALGLASS SUN^{®}.

Quand le premier oxydant est de l'air, la première source d'oxydant comporte de préférence une ou plusieurs soufflantes ou compresseurs d'air ambiant.

Pour la fourniture du deuxième oxydant, la deuxième source d'oxydant comporte typiquement une unité de séparation des gaz de l'air, un pipeline ou un réservoir de stockage du deuxième oxydant. De préférence, la deuxième source d'oxydant est une unité de séparation des gaz de l'air ou un pipeline comme source principale du deuxième oxydant et l'unité de fourniture comporte également réservoir de dépannage ou « backup » du deuxième oxydant comme source auxiliaire du deuxième oxydant, en particulier en cas de défaillance de la source principale du deuxième oxydant.

Quand le premier oxydant est de l'air enrichi en oxygène, la première source d'oxydant comporte avantageusement une ou plusieurs soufflantes ou compresseurs d'air ambiant et une connexion fluidique entre la première et la deuxième source d'oxydant permettant de mélanger une quantité contrôlée du deuxième oxydant avec de l'air afin d'obtenir ainsi un mélange qui constitue le premier oxydant suivant l'invention.

De manière préférée, l'unité de réglage de l'installation est apte à régler la quantité contrôlée du deuxième oxydant qui est mélangée avec de l'air de manière à obtenir un premier oxydant présentant une teneur en oxygène du premier oxydant entre 21%vol et 40%vol, voire entre 21%vol et 25%vol, ou encore entre 40%vol et 90%vol, mais toujours inférieure à la teneur en oxygène du deuxième oxydant.

Le premier échangeur thermique et/ou le deuxième échangeur thermique peuvent être un/des échangeurs thermiques tubulaires.

Le premier échangeur thermique peut être entouré d'une première virole et le deuxième échangeur thermique est entouré d'une deuxième virole séparée de la première virole, et le premier et le deuxième échangeur thermiques peuvent avoir des positions distinctes pas rapport à la chambre de fusion. Selon une forme de réalisation alternative, le premier et le deuxième échangeur thermique sont entourés d'une même virole.

Le four de fusion peut être un four à boucle ou un four float.

La présente invention concerne également l'utilisation de l'installation selon l'une quelconque de ses formes de réalisation dans l'une des formes de mise en oeuvre du procédé suivant l'invention.

L'invention et ses avantages sont décrits plus en détail dans les exemples ci-après, référence étant faite aux figures 1 à 4, dans lesquelles :
- la figure 1 est une représentation schématique de l'opération d'une installation de fusion suivant l'invention lors d'une première phase du procédé suivant l'invention,
- les figures 2 à 4 sont des représentations schématiques de trois formes de mise en oeuvre distinctes de l'opération de l'installation selon la figure 1 lors d'une deuxième phase du procédé.

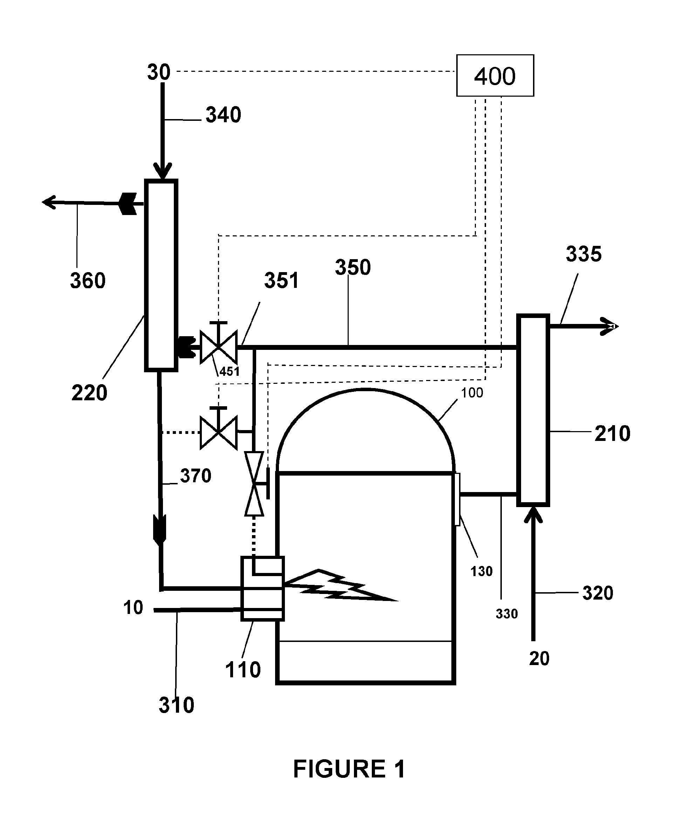

L'installation illustrée dans la figure 1 comporte un four avec une chambre de fusion 100 équipée d'un nombre de premiers brûleurs 110 (un seul premier brûleur est représenté) et une sortie de fumées 120. Le four comporte également une installation de préchauffage comportant un premier échangeur thermique 210 et un deuxième échangeur thermique 220. Un réseau de canalisations relie le premier échangeur thermique 210, le deuxième échangeur thermique 220, les premiers brûleurs 110 et la sortie de fumée 120 de la chambre de fusion 100.

Une source 10 de combustible, tel qu'un combustible gazeux, est reliée par une canalisation 310 à une entrée de combustible des premiers brûleurs 110. Cette source 10 fournit du combustible aux premiers brûleurs 110.

Une source d'air 20, utilisé comme premier oxydant dans le procédé illustré, est reliée par une canalisation 320 à une entrée de fluide caloporteur du premier échangeur thermique 210. La sortie de fumées 130 de la chambre de fusion 100 est reliée par la canalisation 330 par une entrée de fumées du premier échangeur thermique 210. A l'intérieur du premier échangeur thermique 210, les fumées qui ont une température entre 1000°C et 1600°C à la sortie du four, chauffent le fluide caloporteur (air) par échange thermique. On obtient ainsi un flux refroidi de fumées qui est évacué du premier échangeur thermique 210 par la canalisation 335 et un flux chaud du fluide caloporteur (air) qui est évacué du premier échangeur thermique 210 par la canalisation 350.

Une source 30 du deuxième oxydant, typiquement un gaz contenant 90%vol d'oxygène (désigné ci-après « oxydant riche »), fournit un flux du deuxième oxydant qui est amené vers une entrée du deuxième oxydant du deuxième échangeur thermique 220 par la canalisation 340.

Le réseau de canalisations de l'installation comporte également une unité de réglage 400. Cette unité de réglage 400 est connectée à la source 30 du deuxième oxydant et détecte le débit ou volume du deuxième oxydant disponible.

L'unité de réglage est également connectée à des vannes de réglage 451, 453, 454, 471 du réseau de canalisations qui permettent de contrôler notamment les débits de fluide caloporteur (dans le cas illustré : le premier oxydant) vers le deuxième échangeur thermique 220 et les premiers brûleurs 110 et les débits du deuxième oxydant vers les premiers brûleurs 110. L'unité de réglage contrôle ainsi les débits du premier et du deuxième oxydants vers les premiers brûleurs 110. En particulier, en cas de détection de pénurie actuelle ou à prévoir du deuxième oxydant, l'unité de réglage adaptera (comme expliqué plus en détail ci-après) les écoulements du premier et du deuxième oxydants dans l'installation.

Lors de la première phase du procédé telle qu'illustrée dans la figure 1, le flux chaud de fluide caloporteur (air), ayant une température entre 600°C et 800°C, est amené vers une entrée de fluide caloporteur du deuxième échangeur thermique 220 par la branche 351 de la canalisation 350, cette branche 351 étant munie d'une vanne 451 permettant de partiellement ou totalement fermer la branche 351 et de régler ainsi le débit de fluide caloporteur chaud qui entre dans le deuxième échangeur thermique 220.

A l'intérieur du deuxième échangeur thermique 220, le deuxième oxydant (oxydant riche) est préchauffé jusqu'à une température de 400°C à 600°C par échange thermique avec le fluide caloporteur chaud. Le fluide caloporteur est évacué du deuxième échangeur thermique 220 par la canalisation 360 à une température tempérée de 450°C à 500°C. Le deuxième oxydant préchauffé est évacué du deuxième échangeur thermique 220 par la canalisation 370. Cette canalisation 370 amène le deuxième oxydant préchauffé vers une entrée de comburant des premiers brûleurs 110.

Lors de la première phase du procédé telle qu'illustrée dans la figure 1, il n'y a pas de fourniture de premier oxydant (air) aux premiers brûleurs 110 pendant la première phase. Lesdits premiers brûleurs 110 combinent le deuxième oxydant préchauffé avec le combustible de manière à générer une oxycombustion bas-NOx du combustible dans la chambre de fusion 100.

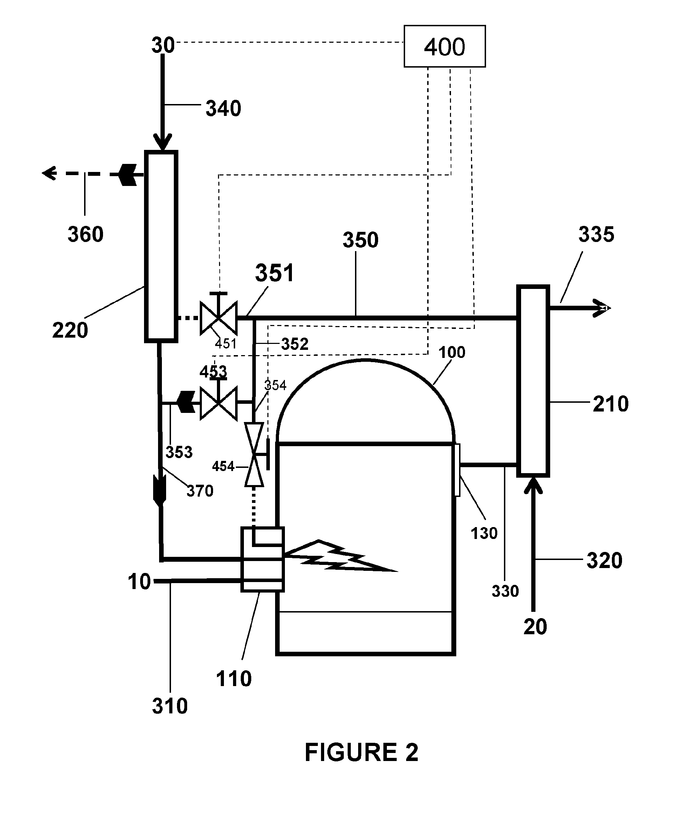

Selon la forme de mise en oeuvre de la deuxième phase illustrée dans la figure 2, la branche 351 de la canalisation 350 est totalement fermée par la vanne 451 et le flux chaud de fluide caloporteur est amené par les branches 352, 353 de cette canalisation 350 vers la canalisation 370 qui connecte la sortie du deuxième oxydant du deuxième échangeur thermique 220 avec les premiers brûleurs 110. La branche 353 est également munie d'une vanne 453 qui permet de partiellement ou totalement fermer la branche 353 et ainsi de réguler le débit du fluide caloporteur (air) chaud envoyé vers la canalisation 370.

Dans la forme d'exécution illustrée, il n'y pas de fourniture de fluide caloporteur chaud vers le deuxième échangeur thermique 220 pendant la deuxième phase du procédé. Par conséquent, le flux du deuxième oxydant (oxydant riche) fourni par la source 30 au deuxième échangeur thermique 220 ne subit pas de préchauffage dans le deuxième échangeur thermique 220. On obtient ainsi, en aval du deuxième échangeur thermique 220, un mélange du deuxième oxydant (oxydant riche) non-préchauffé avec du fluide caloporteur chaud et ce mélange est amené vers une entrée de comburant des premiers brûleurs 110 par la canalisation 370.

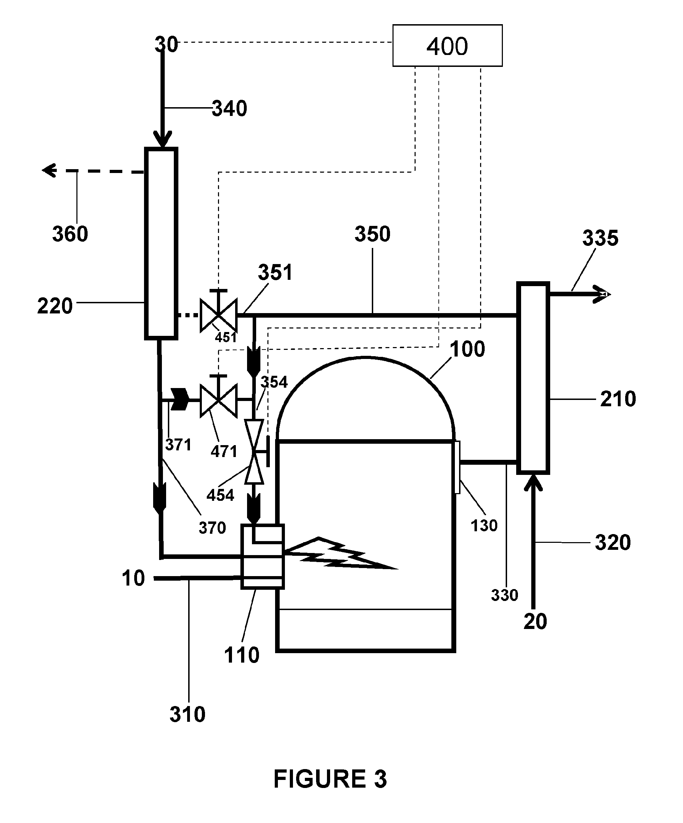

Dans la forme de réalisation de la deuxième phase illustrée dans la figure 3, il n'y a à nouveau pas de fourniture de fluide caloporteur chaud vers le deuxième échangeur thermique 220 et la canalisation 370 amène un flux non-préchauffé du deuxième oxydant (oxydant riche) vers une entrée de comburant des premiers brûleurs 110. Le fluide caloporteur (air) chaud est amené vers une autre entrée de comburant des premiers brûleurs 110 au moyen des branches 352 et 354 de la canalisation 350. La branche 354 est munie d'une vanne 454 qui permet de fermer partiellement ou totalement la branche 354 et ainsi de réguler le débit d'oxydant amené vers les premiers brûleurs 110 par la branche 354. Une branche 371 de la canalisation 370 relie la canalisation 370 avec la branche 354 de la canalisation 350 et permet d'amener une portion du deuxième oxydant vers la branche 354 de manière à mélanger une portion du deuxième oxydant non-préchauffé avec le fluide caloporteur (air) chaud avant que ce dernier soit fourni aux premiers brûleurs en tant que comburant. La branche 370 est munie d'une vanne 471 qui permet de fermer partiellement ou totalement la branche 371 et ainsi de régler la portion du deuxième oxydant (oxydant riche) qui est fournie aux premiers brûleurs sans mélange préalable avec le premier oxydant (air) chaud et la portion du deuxième oxydant (oxydant riche) qui est fournie aux premiers brûleurs après mélange avec le premier oxydant (air) chaud.

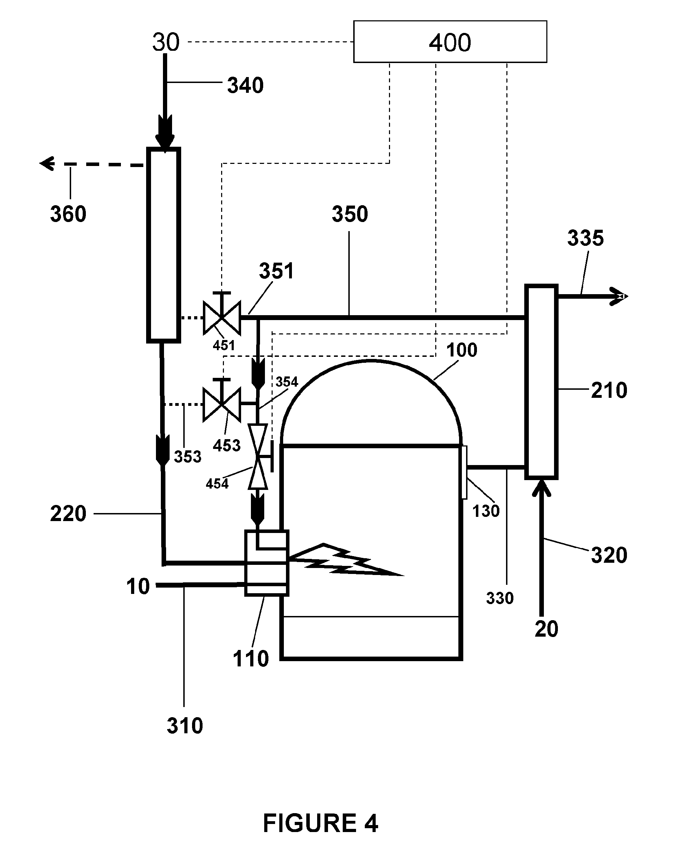

Dans la forme de réalisation de la deuxième phase illustrée dans la figure 4, aucun mélange n'a lieu entre le premier oxydant (air) chaud et le deuxième oxydant (oxydant riche) en amont des premiers brûleurs 110. Les premiers brûleurs sont des brûleurs pour la combustion étagée, un des premiers et deuxième oxydants étant fourni aux premiers brûleurs en tant que comburant primaire et l'autre en tant que comburant secondaire.

Grâce à la présente invention qui permet d'utiliser comme comburant(s) une combinaison du premier et du deuxième oxydant en cas de pénurie du deuxième oxydant riche en oxygène, l'autonomie du four par rapport à la fourniture d'oxydant riche en oxygène est fortement augmentée.

On constate également que, même en cas de pénurie d'oxydant riche en oxygène, le procédé et l'installation suivant l'invention permettent une très grande flexibilité dans le fonctionnement du four pendant la deuxième phase et permettent ainsi d'adapter le fonctionnement du four selon l'effet principal recherché pendant cette deuxième phase (maintenir au maximum la tirée, tirée réduite avec maintien des propriétés du verre fondu, maintien à température prolongée, etc.).

## Revendications

1. Procédé de fusion de verre dans un four de fusion,
• ledit procédé utilisant
i. un premier oxydant choisi parmi l'air et l'air enrichi en oxygène et
ii. un deuxième oxydant ayant une teneur en oxygène de 80%vol à 100%vol, de préférence de 90%vol à 100%vol,
la teneur en oxygène du deuxième oxydant étant supérieure à la teneur en oxygène du premier oxydant,
• le four de fusion comportant :
i. une chambre de fusion (100) équipée de n brûleurs pour la combustion d'un combustible dans la chambre, lesdits n brûleurs générant de l'énergie thermique et un flux chaud de fumées présentant une température à la sortie de la chambre (100) de 1000°C à 1600°C, avec n ≥ 1, m desdits n brûleurs étant des premiers brûleurs (110), avec 1 ≤ m ≤ n, et
ii. une installation de préchauffage,
procédé dans lequel :
• de la matière première solide est fondue dans la chambre de fusion (100) avec obtention de verre fondu,
• le flux chaud de fumées issu de la chambre est introduit dans l'installation de préchauffage,
• un flux d'un fluide caloporteur est chauffé par échange thermique avec le flux chaud des fumées dans un premier échangeur thermique (210) de l'installation de préchauffage de manière à générer un flux refroidi des fumées et un flux chauffé du fluide caloporteur ayant une température de 600°C à 800°C,
et dans lequel :
• dans une première phase du procédé :
- le premier oxydant est utilisé comme fluide caloporteur, et
- un flux du deuxième oxydant est préchauffé dans un deuxième échangeur thermique (220) de l'installation de préchauffage par échange thermique avec le flux chauffé du fluide caloporteur de manière à générer un flux préchauffé du deuxième oxydant ayant une température de 400°C à 600°C et un flux tempéré du fluide caloporteur ayant une température de 450°C à 500°C,
- un débit DO1 du flux préchauffé du deuxième oxydant est fourni aux m premiers brûleurs (110) en tant que comburant, avec DO1 > 0 Nm³,
le procédé étant **caractérisé en ce que** :
• dans une deuxième phase :
- un débit DO2 du deuxième oxydant et un débit DA2 du premier oxydant sont fournis aux m premiers brûleurs (110) en tant que comburants, avec DO1 > DO2 >0 Nm³ et DA2 > 0 Nm³,
- le débit DA2 du premier oxydant est fourni aux m premiers brûleurs (110) sous forme d'une portion correspondante du flux chauffé du fluide caloporteur,
- le débit DO2 du deuxième oxydant est fourni aux m premiers brûleurs(110) :
o entièrement séparément du débit DA2 du premier oxydant, ou
o entièrement mélangé avec le débit DA2 du premier oxydant, ou
o partiellement mélangé avec le débit DA2 du premier oxydant et partiellement séparément du débit DA2 du premier oxydant, de manière à ce que :
i. quand le débit DO2 du deuxième oxydant est partiellement ou totalement mélangé avec le premier oxydant en amont du premier échangeur thermique (210) de l'installation de préchauffage, le mélange ainsi obtenu est utilisé comme fluide caloporteur et,
ii. quand le débit DO2 du deuxième oxydant n'est pas mélangé avec le débit DA2 du premier oxydant en amont du premier échangeur thermique (210) mais uniquement partiellement ou totalement en aval du premier échangeur thermique (210) ou pas du tout, le premier oxydant est utilisé comme fluide caloporteur.

2. Procédé suivant la revendication 1, dans lequel la teneur en oxygène du premier oxydant est entre 21%vol et 40%vol.

3. Procédé suivant la revendication 2, dans lequel la teneur en oxygène du premier oxydant est entre 21%vol et 25%vol.

4. Procédé suivant la revendication 1, dans lequel la teneur en oxygène du premier oxydant est entre 40%vol et 90%vol.

5. Procédé suivant l'une quelconque des revendications précédentes, dans lequel le four de fusion est un four à boucle ou un four float.

6. Procédé suivant l'une quelconque des revendications précédentes, dans lequel m = n.

7. Procédé suivant l'une quelconque des revendications précédentes, dans lequel on utilise l'installation de préchauffage pour également préchauffer le combustible en amont de la chambre de fusion (100).

8. Installation de fusion de verre comportant :
• une unité de fourniture comportant :
i. une source de combustible (10),
ii. une première source (20) d'un premier oxydant qui consiste en de l'air ou de l'air enrichi en oxygène,
iii. une deuxième source (30) d'un deuxième oxydant ayant une teneur en oxygène de 80%vol à 100%vol, de préférence de 90%vol à 100%vol, et supérieure à la teneur en oxygène du premier oxydant,
• un four de fusion comportant :
i. une chambre de fusion (100) équipée de n brûleurs pour la combustion d'un combustible avec génération d'énergie thermique et un flux chaud de fumées à l'intérieur de la chambre (100), avec n ≥ 1, la chambre de fusion (100) comportant également une sortie de fumées (130) pour l'évacuation de la chambre du flux chaud de fumées,
ii. une installation de préchauffage (210, 220),
• un réseau de canalisations reliant l'unité de fourniture (10, 20, 30), l'installation de préchauffage (210, 220) et la chambre de fusion (100), installation de fusion dans laquelle :
• m des n brûleurs sont des premiers brûleurs (110), avec 1 ≤ m ≤ n, et
• l'installation de préchauffage comporte :
i. un premier échangeur thermique (210) pour le chauffage d'un flux d'un fluide caloporteur contenant du premier oxydant par échange thermique avec le flux chaud de fumées, le réseau de canalisation reliant la sortie de fumées (130) de la chambre de fusion (100) à une entrée de flux chaud de fumées dudit premier échangeur thermique (210) et reliant la première source (20) à une entrée de fluide caloporteur à chauffer dudit premier échangeur thermique (210),
ii. un deuxième échangeur thermique (220) pour le préchauffage d'un flux du deuxième oxydant par échange thermique avec le flux chauffé de fluide caloporteur, le réseau de canalisations reliant la deuxième source (30) avec une entrée du deuxième oxydant du deuxième échangeur (220), reliant une sortie de flux chauffé de fluide caloporteur du premier échangeur thermique (210) avec une entrée de flux chauffé de fluide caloporteur du deuxième échangeur thermique (220) et reliant une sortie d'un flux chaud du deuxième oxydant du deuxième échangeur thermique (220) avec une entrée de comburant des m premiers brûleurs (110),
**caractérisée en ce que**:
• le réseau de canalisation relie également une sortie de flux chauffé de fluide caloporteur du premier échangeur thermique (210) avec une entrée de comburant des m premiers brûleurs,
• le réseau de canalisations étant muni d'une unité de réglage (400) pour le réglage du débit de premier oxydant vers les m premiers brûleurs (110) et pour le réglage du débit du deuxième oxydant vers les m premiers brûleurs (110).

9. Installation suivant la revendication 8, dans laquelle l'unité de réglage (400) est connectée à la deuxième source (30) pour la détection d'un débit ou volume disponible du deuxième oxydant et pour le réglage des débits de premier et deuxième oxydants vers les m premiers brûleurs (110) en fonction du débit ou du volume disponible détecté.

10. Installation suivant l'une des revendications 8 à 9, dans laquelle m = n.

11. Installation suivant l'une quelconque des revendications 8 à 10, dans laquelle le réseau de canalisations relie une sortie de flux chauffé de fluide caloporteur du premier échangeur thermique (210) avec une entrée de comburant des m premiers brûleurs (110) sans passage par le deuxième échangeur thermique (220).

12. Installation suivant l'une quelconque des revendications 8 à 11, dans laquelle la première source de comburant (20) est un pipeline, un réservoir de premier comburant liquéfié ou une installation de séparation des gaz de l'air, de préférence un pipeline ou une installation de séparation des gaz de l'air.

13. Installation suivant l'une quelconque des revendications 8 à 12, dans laquelle l'unité de fourniture comprend également un réservoir de dépannage du deuxième oxydant.

14. Installation suivant l'une quelconque des revendications 8 à 13, ladite installation comportant un four de fusion float ou un four de fusion à boucle.

15. Utilisation d'une installation suivant l'une quelconque des revendications 8 à 14, pour la mise en oeuvre d'un procédé de fusion suivant l'une quelconque des revendications 1 à 7.
